(19) **Europäisches Patentamt / European Patent Office / Office européen des brevets**

(11) **EP 4 290 212 B1**

(12) **EUROPEAN PATENT SPECIFICATION**

(45) Date of publication and mention
of the grant of the patent:
**22.04.2026 Bulletin 2026/17**

(21) Application number: **21953957.4**

(22) Date of filing: **21.10.2021**

(51) International Patent Classification (IPC):
**G01N 11/14** (2006.01)

(52) Cooperative Patent Classification (CPC):
**G01N 11/14; C08J 3/248; C08J 2323/06**

(86) International application number:
**PCT/CN2021/125356**

(87) International publication number:
**WO 2023/019721 (23.02.2023 Gazette 2023/08)**

(54) **CROSS-LINKING PERFORMANCE CONSISTENCY CHARACTERIZATION METHOD FOR CROSS-LINKED POLYETHYLENE 500 KV CABLE INSULATION MATERIAL**

VERNETZUNGSLEISTUNGSKONSISTENZCHARAKTERISIERUNGSVERFAHREN FÜR VERNETZTES POLYETHYLEN 500 KV-KABELISOLIERMATERIAL

PROCÉDÉ DE CARACTÉRISATION DE COHÉRENCE DE PERFORMANCE DE RÉTICULATION POUR MATÉRIAU D'ISOLATION DE CÂBLE 500 KV À POLYÉTHYLÈNE RÉTICULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.08.2021 CN 202110959638**

(43) Date of publication of application:
**13.12.2023 Bulletin 2023/50**

(73) Proprietor: **Electric Power Research Institute, China Southern Power Grid**
**Guangzhou, Guangdong 510670 (CN)**

(72) Inventors:
• **HOU, Shuai**
**Guangzhou, Guangdong 510663 (CN)**
• **FU, Mingli**
**Guangzhou, Guangdong 510663 (CN)**
• **JIA, Lei**
**Guangzhou, Guangdong 510663 (CN)**
• **ZHAN, Yunpeng**
**Guangzhou, Guangdong 510663 (CN)**
• **ZHU, Wenbo**
**Guangzhou, Guangdong 510663 (CN)**
• **HUI, Baojun**
**Guangzhou, Guangdong 510663 (CN)**
• **FENG, Bin**
**Guangzhou, Guangdong 510663 (CN)**
• **ZHANG, Yifan**
**Guangzhou, Guangdong 510663 (CN)**

(74) Representative: **Hoffmann Eitle**
**Patent- und Rechtsanwälte PartmbB**
**Arabellastraße 30**
**81925 München (DE)**

(56) References cited:
**WO-A1-2019/201153      CN-A- 102 183 539**
**CN-A- 103 808 754       CN-A- 107 314 942**
**CN-A- 110 579 692       JP-A- 2015 224 996**
**US-A1- 2015 291 774**

• **ANONYMUS: "Rubber Property-Vulcanization Using Rotorless Cure Meters 1. ASTM D5289-95", 1 March 2021 (2021-03-01), pages 1 - 6, XP093239937, Retrieved from the Internet <URL:https://compass.astm.org/document/? contentCode=ASTM%7CD5289-95%7Cen-US& proxycl=https%3A%2F%2Fsecure.astm.org& fromLogin=true> [retrieved on 20250116]**

**Description**

TECHNICAL FIELD

This disclosure belongs to the technical field of high voltage and insulation, and relates to a method for characterizing consistency of cross-linking performance of 500kV crosslinked polyethylene cable insulation material.

BACKGROUND

The critical point in production of 500kV cross-linked cables is to realize "zero" defect manufacturing of large-scale products for a long time. Also, insulation materials of 500kV cables needs to meet characteristics and requirements for cable manufacturing. 500kV cables have significantly improved insulation thickness and energy transport density, which is the biggest difference from 110kV/220kV cables.

Regarding thick insulation cables, by-products of cross-linking need to be reduced to decrease degassing time in the cable manufacturing process, which requires increased cross-linking efficiency on the premise of ensuring cross-linking properties. These requirements are closely related to molecular weight, molecular weight distribution, and branched structure of molecular chains of base polyethylene resin, as well as addition amount of cross-linking agent in 500kV cable insulation materials. The 500kV cable insulation material needs to be effectively characterized and controlled in order to allow cross-linking characteristics of the 500kV cable insulation material to comply with requirements of cable manufacturing. In industrial production, its cross-linking behavior is generally characterized by thermal elongation of materials. This characterization method is static that cannot reflect dynamic process of the cross-linking reaction of the materials. Also, the process of cross-linking reaction can be characterized by a cross-linking reaction kinetic curve. However, the cross-linking reaction kinetic curve is extremely sensitive to test conditions. The tested curves can have significant differences even if small differences in heat and shear exist, resulting in uncomparable results obtained at different test places. When a same material is tested in first and second organizations (i.e., first and second different test places) respectively, the obtained results are different and thus it is impossible to make evaluation on consistency of cross-linking kinetic property of the same material, thereby also impossible to establish a unified technical standard system for material manufacturers and users. This has a great adverse effect on the research and development, production, inspection, acceptance and other phases of cross-linkable materials. Related technologies are known from WO 2019201153A1, US 20150291774A1, and ASTM D5289.

SUMMARY

An object of the present disclosure is to overcome deficiencies in the relative art, by providing a method for characterizing consistency of cross-linking performance of 500kV crosslinked polyethylene cable insulation material. In the method, cross-linking reaction kinetic of the 500kV crosslinked polyethylene cable insulation material is tested by using a torque rheometer, and differences of experimental results obtained at different test places are eliminated by using a standard sample transformation method. When referring to the different test places, it is the same material that is tested in the different test places, such as first and second organizations respectively (called as a first test place and a second test place). Effective characterization of cross-linking reaction properties of the 500kV crosslinked polyethylene cable insulation material is achieved, and the problem of accurate comparison of the results at different test places is solved.

In order to achieve the above object, the technical solution adopted in the present disclosure includes: a method for characterizing consistency of cross-linking performance of 500kV crosslinked polyethylene cable insulation material, including:

(i) preparing a standard sample: fully stirring to mix low-density polyethylene and dicumyl peroxide at a temperature in a range from 63°C to 67°C, and standing to allow thorough diffusion of dicumyl peroxide into low-density polyethylene;
(ii) testing, by using a torque rheometer, cross-linking reaction kinetic curves of the standard sample and a sample to be tested, wherein the sample to be tested is cable insulation plastic granules meeting common standards in the cable manufacturing industry; and
(iii) eliminating, by using a standard sample transformation method, differences in the cross-linking reaction kinetic curves of the samples introduced due to different test places.

In the present disclosure, by testing cross-linking reaction kinetic curves of the 500kV crosslinked polyethylene cable insulation material by using a torque rheometer and eliminating differences of results obtained at different test places by using a standard sample transformation method, effective characterization of consistency of cross-linking reaction properties of the 500kV crosslinked polyethylene cable insulation material at different test places is achieved, thus solving the problem of accurate comparison of the results at different test places. The production of 500kV cables adopts the peroxide cross-linking process, that is, the use of peroxide as an initiator of the cross-linking reaction to complete the cross-linking reaction. The cross-linking reaction properties of 500kV crosslinked polyethylene cable insulation material are key indicators for affecting the performance of cable products. Since the insulation thickness and working electric field of extra high voltage cables are higher than those of low-voltage cables, strict requirements are imposed on the cross-linking reaction properties of the 500kV crosslinked polyethylene cable insulation material. In order to ensure stability of process and performance in cable production, it is necessary to precisely control the cross-linking reaction properties of 500kV crosslinked polyethylene cable insulation material produced in different batches and by different manufacturers within a specific range, that is, to maintain consistency of cross-linking performance of the material. How to effectively characterize the consistency is a key step in production and application of the 500kV crosslinked polyethylene cable insulation material.

The present disclosure provides a standard sample with consistent cross-linking performance based on an established standard sample formulation and a method for preparing the same. A transformation matrix for eliminating difference of properties caused by instruments at the first and second different test places can be obtained by transforming the cross-linking reaction kinetic curve of the standard sample. After that, the tested results of the sample to be tested obtained at the first and second test places are transformed by using the matrix, thereby eliminating the influence due to the difference between the different test places.

Preferably, the mixing chamber of the torque rheometer includes a stainless steel rotor and a stainless steel cavity. The torque rheometer is capable of providing a uniform temperature field of $155.0\pm0.5°C$, a torque of 100Nm, and a torque measurement accuracy of $\pm0.1$ Nm. Also, the torque rheometer is capable of recording and reproducing the torque test curve.

Preferably, in step (i), the mass ratio of low-density polyethylene to dicumyl peroxide is 100:1.95. The low-density polyethylene has a melt flow index of 2.0 g/10min and a density of 0.92 g/cm$^3$ under 190°C and 2.16 kg. The standing is conducted not less than 6 hours.

Preferably, in step (ii), conditions for testing the cross-linking reaction kinetic curve includes the follows. The temperature of the mixing chamber of the torque rheometer is in a range from 154.5°C to155.5°C. The rotor speed of the torque rheometer is 35 r/min. The mass of the sample is in a range from 44.9 g to 45.1g.

Preferably, in step (ii), testing a cross-linking reaction kinetic curve includes: raising the temperature of the mixing chamber of the torque rheometer to the range from 154.5°C to 155.5°C, rotating the rotor, then introducing the sample into the mixing chamber of the torque rheometer and quickly compacting the sample with a piston, then recording the rotor torque to form the cross-linking reaction kinetic curve, wherein the torque reaches a minimum value and then increases to a maximum value, and then stopping the test.

In the invention, in step (ii), the cross-linking reaction kinetic curve includes three points which are denoted as point A, point B, and point C respectively. Among them, the point A represents a loading peak, indicating that the sample is effectively loaded into the mixing chamber of the torque rheometer. The point B is a point where torque reaches the minimum value, indicating that the sample has been completely formed into a melt. The curve segment between the point A and the point B indicates a melting process of the sample. The point C is a point where torque reaches a maximum value, indicating completion of the cross-linking reaction. The curve segment between the point B and the point C indicates the cross-linking reaction process of the sample. The time difference $\Delta t$ between the point B and the point C indicates a time period of the cross-linking reaction. The torque difference $\Delta N$ between the point B and the point C indicates the degree of the cross-linking reaction.

In the invention, in step (iii), the standard sample transformation method is conducted by transforming between the cross-linking reaction kinetic curves of the samples at the first and second test places. The method includes:

transforming the cross-linking reaction kinetic curve of the standard sample by mapping a coordinate space at the second test place into a coordinate space at the first test place through linear transformation according to a transformation relationship shown in formula (1):

$$\begin{bmatrix} \alpha & \beta \\ \lambda & \mu \end{bmatrix} \begin{bmatrix} t \\ n \end{bmatrix} = \begin{bmatrix} T \\ N \end{bmatrix} \qquad (1)$$

and then performing the same mapping on the cross-linking reaction kinetic curve of the sample to be tested by using $\begin{bmatrix} \alpha & \beta \\ \lambda & \mu \end{bmatrix}$.

In the formula (1), $\begin{bmatrix} \alpha & \beta \\ \lambda & \mu \end{bmatrix}$ represents a transformation matrix, $\begin{bmatrix} t \\ n \end{bmatrix}$ represents coordinates at the second test

place, and $\begin{bmatrix} T \\ N \end{bmatrix}$ represents coordinates at the first test place.

The transformation matrix for eliminating difference of properties caused by instruments at first and second different test places can be obtained by transforming the cross-linking reaction kinetic curve of the standard sample. After that, the tested results of the sample to be tested obtained at the first and second test places are transformed by using the matrix, thereby eliminating the influence due to the difference between the different test places.

In the invention, the transformation matrix $\begin{bmatrix} \alpha & \beta \\ \lambda & \mu \end{bmatrix}$ is solved by the following procedure. Coordinates of the point B in the cross-linking reaction kinetic curves of the standard sample at the second test place and the first test place are determined as $(t_B,n_B)$, $(T_B,N_B)$ respectively; and coordinates of the point C in the cross-linking reaction kinetic curves of the standard sample at the second test place and the first test place are determined as $(t_C,n_C)$, $(T_C,N_C)$ respectively. The following formula (2) and formula (3) are obtained according to the formula (1):

$$\begin{cases} \alpha t_B + \beta n_B = T_B \\ \alpha t_C + \beta n_C = T_C \end{cases} \qquad (2)$$

$$\begin{cases} \lambda t_B + \mu n_B = N_B \\ \lambda t_C + \mu n_C = N_C \end{cases} \qquad (3)$$

Solutions of the formula (2) and the formula (3) are respectively obtained as follows:

$$\begin{cases} \alpha = \begin{vmatrix} T_B & n_B \\ T_C & n_C \end{vmatrix} / \begin{vmatrix} t_B & n_B \\ t_C & n_C \end{vmatrix} \\ \beta = \begin{vmatrix} T_B & t_B \\ T_C & t_C \end{vmatrix} / \begin{vmatrix} t_B & n_B \\ t_C & n_C \end{vmatrix} \end{cases} \qquad (4)$$

$$\begin{cases} \lambda = \begin{vmatrix} N_B & n_B \\ N_C & n_C \end{vmatrix} / \begin{vmatrix} t_B & n_B \\ t_C & n_C \end{vmatrix} \\ \mu = \begin{vmatrix} N_B & t_B \\ N_C & t_C \end{vmatrix} / \begin{vmatrix} t_B & n_B \\ t_C & n_C \end{vmatrix} \end{cases} \qquad (5)$$

Each matrix element of the transformation matrix $\begin{bmatrix} \alpha & \beta \\ \lambda & \mu \end{bmatrix}$ can be calculated according to the formula (4) and the formula (5).

Compared to the related art, the present disclosure has the following beneficial effects. The characterization method of the present disclosure is capable of effectively testing dynamic cross-linking performance of the 500kV cross-linked polyethylene cable insulation material and eliminating influence to the tested results due to the difference at different test places.

BRIEF DESCRIPTION OF THE DRAWINGS

FIG. 1 shows a side sectional view of a rotor of a torque rheometer.
FIG. 2 shows a front view (left) and a left view (right) of a mixing chamber of the torque rheometer.
FIG. 3 shows a cross-linking kinetic curve of a standard sample at a first test place.
FIG. 4 shows a cross-linking kinetic curve of a standard sample at a second test place.
FIG. 5 shows cross-linking reaction kinetic curves of a sample to be tested at first and second test places.
FIG. 6 shows cross-linking reaction kinetic curves of the sample to be tested after transformation by using a standard sample transformation method.

DETAILED DESCRIPTION

In order to better illustrate the objective, technical solutions and advantages of the present disclosure, the present disclosure will be further described below in conjunction with particular examples and accompanying drawings.

Example 1

This example provides a method for characterizing consistency of cross-linking performance of 500kV cross-linked polyethylene cable insulation material. The characterization method includes the following steps.

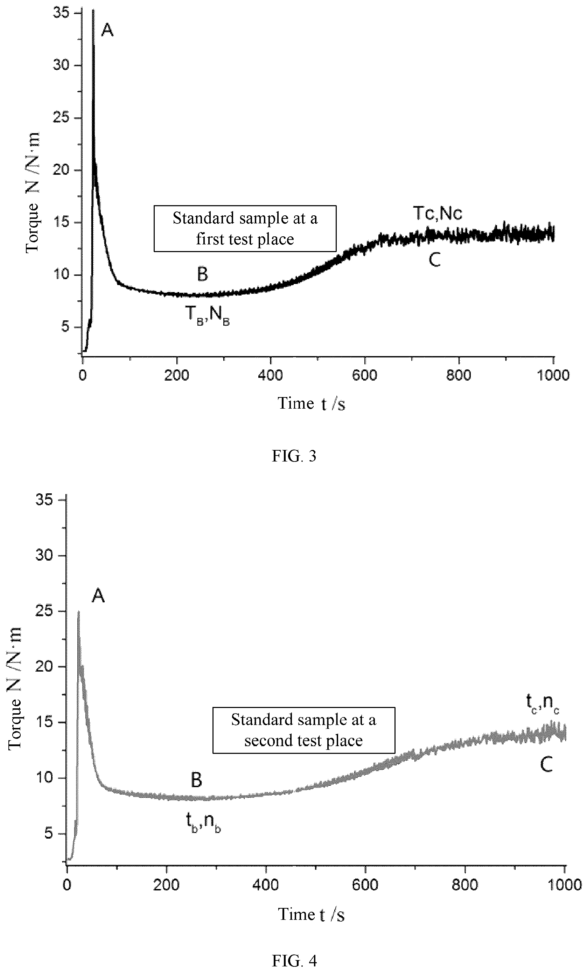

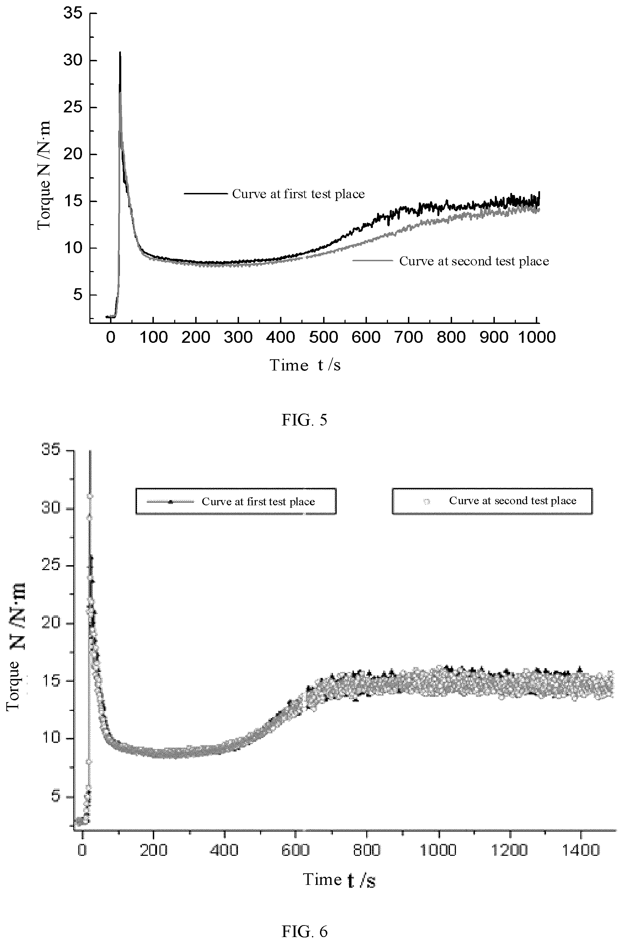

(1) Preparation of a standard sample. 500 parts by weight of low-density polyethylene and 9.75 parts by weight of dicumyl peroxide were placed in a stainless steel container, stirred to mix evenly at 65°C to allow dicumyl peroxide to uniformly adhere to the surface of low-density polyethylene particles, followed by standing for eight hours to allow thorough diffusion of dicumyl peroxide into low-density polyethylene particles.
The low-density polyethylene has a melt flow index of 2.0 g/10min and a density of 0.92 g/cm$^3$ under 190°C and 2.16 kg.
(2) The temperature of the torque rheometer was raised to 155°C. The temperature inside the mixing chamber of the torque rheometer was tested. When the temperature of individual parts reaches between 154.5°C and 155.5°C, the rotor of the torque rheometer was started to rotate at a rotor speed of 35 r/min.
(3) 45.0 g of the standard sample was weighted and added to the mixing chamber of the torque rheometer, then quickly compacted with a piston of the torque rheometer at a load of 1 kg, followed by recording the rotor torque, when the torque reached a minimum value and then increased to a maximum value, the test was stopped, and the cross-linking reaction kinetic curve was obtained. The cross-linking reaction kinetic curves of the standard sample at the first test place and the second test place are shown in FIGs. 3 and 4 respectively.
(4) The cross-linking reaction kinetic curves of the sample to be tested at the first and second test places were tested according to the test method in step (3). The cross-linking reaction kinetic curves of the sample to be tested are shown in FIG. 5.
(5) Transformation between the cross-linking reaction kinetic curves of the standard sample were performed by mapping a coordinate space at the second test place into a coordinate space at the first test place through linear transformation according to a transformation relationship shown in formula (1):

$$\begin{bmatrix} \alpha & \beta \\ \lambda & \mu \end{bmatrix} \begin{bmatrix} t \\ n \end{bmatrix} = \begin{bmatrix} T \\ N \end{bmatrix} \qquad (1)$$

In the formula (1), $\begin{bmatrix} \alpha & \beta \\ \lambda & \mu \end{bmatrix}$ represents the transformation matrix, $\begin{bmatrix} t \\ n \end{bmatrix}$ represents coordinates at the second test place, and $\begin{bmatrix} T \\ N \end{bmatrix}$ represents coordinates at the first test place.

The transformation matrix $\begin{bmatrix} \alpha & \beta \\ \lambda & \mu \end{bmatrix}$ was solved by: determining coordinates of the point B in the cross-linking reaction kinetic curves of the standard sample at the second test place and the first test place as $(t_B, n_B)$, $(T_B, N_B)$ respectively; and determining coordinates of the point C in the cross-linking reaction kinetic curves of the standard sample at the second test place and the first test place as $(t_C, n_C)$, $(T_C, N_C)$ respectively.

The following formula (2) and formula (3) were obtained according to the formula (1):

$$\begin{cases} \alpha t_B + \beta n_B = T_B \\ \alpha t_C + \beta n_C = T_C \end{cases} \qquad (2)$$

$$\begin{cases} \lambda t_B + \mu n_B = N_B \\ \lambda t_C + \mu n_C = N_C \end{cases} \qquad (3)$$

Solutions of the formula (2) and the formula (3) were respectively as follows:

$$\begin{cases} \alpha = \begin{vmatrix} T_B & n_B \\ T_C & n_C \end{vmatrix} / \begin{vmatrix} t_B & n_B \\ t_C & n_C \end{vmatrix} \\ \beta = \begin{vmatrix} T_B & t_B \\ T_C & t_C \end{vmatrix} / \begin{vmatrix} t_B & n_B \\ t_C & n_C \end{vmatrix} \end{cases} \quad (4)$$

$$\begin{cases} \lambda = \begin{vmatrix} N_B & n_B \\ N_C & n_C \end{vmatrix} / \begin{vmatrix} t_B & n_B \\ t_C & n_C \end{vmatrix} \\ \mu = \begin{vmatrix} N_B & t_B \\ N_C & t_C \end{vmatrix} / \begin{vmatrix} t_B & n_B \\ t_C & n_C \end{vmatrix} \end{cases} \quad (5)$$

Each matrix element of the transformation matrix $\begin{bmatrix} \alpha & \beta \\ \lambda & \mu \end{bmatrix}$ can be calculated according to the formula (4) and the formula (5).

(6) The same mapping was established between the cross-linking reaction kinetic curves of the sample to be tested by using the $\begin{bmatrix} \alpha & \beta \\ \lambda & \mu \end{bmatrix}$.

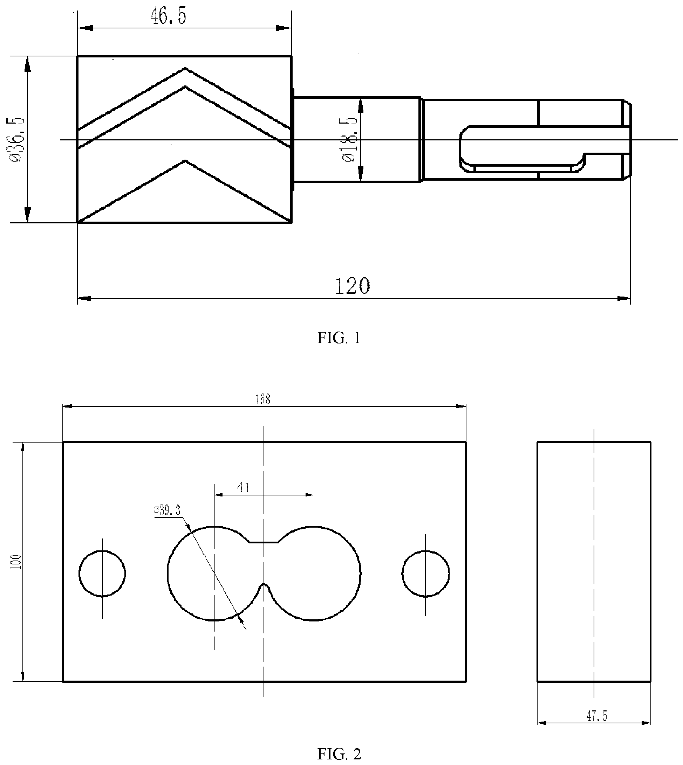

The mixing chamber of the torque rheometer used in this example includes a stainless-steel cavity and two stainless steel rotors. FIG. 1 shows a side sectional view of the rotor of the torque rheometer. FIG. 2 shows a front view (left) and a left view (right) of the mixing chamber of the torque rheometer.

FIG. 3 shows the cross-linking kinetic curve of the standard sample at the first test place. FIG. 4 shows the cross-linking kinetic curve of the standard sample at the second test place. As can be seen from FIGs. 3 and 4, the cross-linking reaction kinetic curve includes three points which are denoted as point A, point B, and point C respectively. Among them, the point A represents a loading peak, indicating that the sample is effectively loaded into the mixing chamber of the torque rheometer. The point B is a point where torque reaches the minimum value, indicating that the sample has been completely formed into a melt. The curve segment between the point A and the point B indicates a melting process of the sample. The point C is a point where torque reaches a maximum value, indicating completion of the cross-linking reaction. The curve segment between the point B and the point C indicates the cross-linking reaction process of the sample. The time difference $\Delta t$ between the point B and the point C indicates a time period of the cross-linking reaction. The torque difference $\Delta N$ between the point B and the point C indicates the degree of the cross-linking reaction.

FIG. 5 shows cross-linking reaction kinetic curves of a sample to be tested at first and second test places. FIG. 6 shows cross-linking reaction kinetic curves of the sample to be tested after transformation by using a standard sample transformation method. As can be seen from FIGs. 5 and 6, the cross-linking reaction kinetic curves of the samples to be tested at the first and second test places have a difference. However, the difference in the cross-linking reaction kinetic curves of the samples to be tested at the first and second test places is almost eliminated after transformation by using the standard sample transformation method. The scattered data points can be substantially in coincidence with the shape of the curve as a whole, and thus the critical data such as the cross-linking reaction time $\Delta t$ and the degree of the cross-linking reaction $\Delta N$ are in consistency between different test places. The method of the present disclosure is demonstrated to enable to effectively characterize the cross-linking performance of 500kV crosslinked polyethylene cable insulation material, and the cross-linking performance of the 500kV crosslinked polyethylene cable insulation material obtained is consistent, thereby solving inconsistency of data obtained at different test places.

It is noted that the above examples are merely used to describe the technical solutions of the present disclosure rather than to limit the protection scope of the present disclosure, which is defined by the appended claims.

**Claims**

1. A method for characterizing consistency of cross-linking performance of 500KV crosslinked polyethylene cable insulation material, comprising:

   (i) preparing a standard sample, comprising fully stirring to mix low-density polyethylene and dicumyl peroxide at a temperature in a range from 63°C to 67°C, and standing to allow thorough diffusion of dicumyl peroxide into low-density polyethylene;
   (ii) testing, by using a torque rheometer, cross-linking reaction kinetic curves of the standard sample and a sample to be tested; and

(iii) eliminating, by using a standard sample transformation method, differences in the cross-linking reaction kinetic curves of the samples introduced due to different test places;

wherein in step (ii), the cross-linking reaction kinetic curve comprises three points which are denoted as point A, point B, and point C respectively,

wherein the point A represents a loading peak, indicating that the sample is effectively loaded into a mixing chamber of the torque rheometer,
the point B is a point where torque reaches a minimum value, indicating that the sample has been completely formed into a melt,
a curve segment between the point A and the point B indicates a melting process of the sample,
the point C is a point where torque reaches a maximum value, indicating completion of a cross-linking reaction,
a curve segment between the point B and the point C indicates the cross-linking reaction process of the sample,
a time difference $\Delta t$ between the point B and the point C indicates a time period of the cross-linking reaction, and
a torque difference $\Delta N$ between the point B and the point C indicates a degree of the cross-linking reaction;

wherein in step (iii), the standard sample transformation method is conducted by transforming between the cross-linking reaction kinetic curves of the samples respectively at a first test place and a second test place, which comprises:

transforming the cross-linking reaction kinetic curve of the standard sample by mapping a coordinate space at the second test place into a coordinate space at the first test place through linear transformation according to a transformation relationship shown in formula (1):

$$\begin{bmatrix} \alpha & \beta \\ \lambda & \mu \end{bmatrix} \begin{bmatrix} t \\ n \end{bmatrix} = \begin{bmatrix} T \\ N \end{bmatrix} \qquad (1)$$

wherein in the formula (1), $\begin{bmatrix} \alpha & \beta \\ \lambda & \mu \end{bmatrix}$ represents a transformation matrix, $\begin{bmatrix} t \\ n \end{bmatrix}$ represents coordinates at the second test place, and $\begin{bmatrix} T \\ N \end{bmatrix}$ represents coordinates at the first test place; and

performing the same mapping on the cross-linking reaction kinetic curve of the sample to be tested by using $\begin{bmatrix} \alpha & \beta \\ \lambda & \mu \end{bmatrix}$;

wherein the transformation matrix $\begin{bmatrix} \alpha & \beta \\ \lambda & \mu \end{bmatrix}$ is solved by:

determining coordinates of the point B and coordinates of the point C in the cross-linking reaction kinetic curves of the standard sample at the second test place and the first test place as $(t_B, n_B), (T_B, N_B)$ and $(t_C, n_C), (T_C, N_C)$, respectively;
acquiring formula (2) and formula (3) according to the formula (1);

$$\begin{cases} \alpha t_B + \beta n_B = T_B \\ \alpha t_C + \beta n_C = T_C \end{cases} \qquad (2)$$

$$\begin{cases} \lambda t_B + \mu n_B = N_B \\ \lambda t_C + \mu n_C = N_C \end{cases} \qquad (3)$$

acquiring solutions of the formula (2) and the formula (3), respectively represented by formula (4) and formula (5); and

$$\begin{cases} \alpha = \begin{vmatrix} T_B & n_B \\ T_C & n_C \end{vmatrix} / \begin{vmatrix} t_B & n_B \\ t_C & n_C \end{vmatrix} \\ \beta = \begin{vmatrix} T_B & t_B \\ T_C & t_C \end{vmatrix} / \begin{vmatrix} t_B & n_B \\ t_C & n_C \end{vmatrix} \end{cases} \qquad (4)$$

$$\begin{cases} \lambda = \begin{vmatrix} N_B & n_B \\ N_C & n_C \end{vmatrix} / \begin{vmatrix} t_B & n_B \\ t_C & n_C \end{vmatrix} \\ \mu = \begin{vmatrix} N_B & t_B \\ N_C & t_C \end{vmatrix} / \begin{vmatrix} t_B & n_B \\ t_C & n_C \end{vmatrix} \end{cases} \qquad (5)$$

calculating each matrix element of the transformation matrix $\begin{bmatrix} \alpha & \beta \\ \lambda & \mu \end{bmatrix}$ according to the formula (4) and the formula (5).

2. The characterization method according to claim 1, wherein in step (i), a mass ratio of low-density polyethylene to dicumyl peroxide is 100: 1.95, the low-density polyethylene has a melt flow index of 2.0 g/10min and a density of 0.92 g/cm$^3$ under 190°C and 2.16 kg, and the standing is conducted not less than 6 hours.

3. The characterization method according to claim 1, wherein in step (ii), conditions for testing the cross-linking reaction kinetic curve comprises:

   a temperature of a mixing chamber of the torque rheometer being in a range from 154.5°C to155.5°C,
   a rotor speed of the torque rheometer being 35 r/min, and
   a mass of the sample being in a range from 44.9 g to 45.1g.

4. The characterization method according to claim 1, wherein in step (ii), testing the cross-linking reaction kinetic curve comprises:

   raising a temperature of a mixing chamber of the torque rheometer to a range from 154.5°C to 155.5°C, rotating a rotor, then introducing the sample into the mixing chamber of the torque rheometer and quickly compacting the sample with a piston; and
   recording a curve of rotor torque as function of time, during which the torque reaches a minimum value and then increases to a maximum value, and
   stopping the test and obtaining the cross-linking reaction kinetic curve.

**Patentansprüche**

1. Verfahren zur Charakterisierung der Konsistenz der Vernetzungsleistung von 500-kV-Kabelisoliermaterial aus vernetztem Polyethylen, umfassend:

   (i) Herstellen einer Standardprobe, umfassend vollständiges Rühren zum Mischen von Polyethylen niedriger Dichte und Dicumylperoxid bei einer Temperatur in einem Bereich von 63 °C bis 67 °C und Stehenlassen, um eine gründliche Diffusion von Dicumylperoxid in Polyethylen niedriger Dichte zu ermöglichen;
   (ii) Testen der kinetischen Kurven der Vernetzungsreaktion der Standardprobe und einer zu testenden Probe unter Verwendung eines Drehmoment-Rheometers; und
   (iii) Eliminieren von aufgrund unterschiedlicher Prüfstellen eingeführten Unterschieden in den kinetischen Kurven der Vernetzungsreaktion der Proben unter Verwendung eines Standardproben-Transformationsverfahrens;

   wobei in Schritt (ii) die kinetische Kurve der Vernetzungsreaktion drei Punkte umfasst, die jeweils als Punkt A, Punkt B und Punkt C bezeichnet werden,

   wobei der Punkt A eine Beladungsspitze darstellt, was anzeigt, dass die Probe wirksam in eine Mischkammer des Drehmoment-Rheometers eingebracht wird,

der Punkt B ein Punkt ist, bei dem das Drehmoment einen Minimalwert erreicht, was anzeigt, dass die Probe vollständig zu einer Schmelze gebildet worden ist,

ein Kurvenabschnitt zwischen dem Punkt A und dem Punkt B einen Schmelzprozess der Probe anzeigt,

der Punkt C ein Punkt ist, bei dem das Drehmoment einen Maximalwert erreicht, was den Abschluss einer Vernetzungsreaktion anzeigt,

ein Kurvenabschnitt zwischen dem Punkt B und dem Punkt C den Vernetzungsreaktionsverlauf der Probe anzeigt,

eine Zeitdifferenz $\Delta t$ zwischen dem Punkt B und dem Punkt C eine Zeitdauer der Vernetzungsreaktion anzeigt, und

eine Drehmomentdifferenz $\Delta N$ zwischen dem Punkt B und dem Punkt C einen Grad der Vernetzungsreaktion anzeigt;

wobei in Schritt (iii) das Standardproben-Transformationsverfahren durch Transformation zwischen den kinetischen Kurven der Vernetzungsreaktion der Proben jeweils an einer ersten Prüfstelle und einer zweiten Prüfstelle durchgeführt wird, was Folgendes umfasst:

Transformieren der kinetischen Kurve der Vernetzungsreaktion der Standardprobe durch Abbilden eines Koordinatenraums an der zweiten Prüfstelle in einen Koordinatenraum an der ersten Prüfstelle mittels linearer Transformation gemäß einer in Formel (1) dargestellten Transformationsbeziehung:

$$\begin{bmatrix} \alpha & \beta \\ \lambda & \mu \end{bmatrix} \begin{bmatrix} t \\ n \end{bmatrix} = \begin{bmatrix} T \\ N \end{bmatrix} \qquad (1)$$

wobei in der Formel (1) $\begin{bmatrix} \alpha & \beta \\ \lambda & \mu \end{bmatrix}$ eine Transformationsmatrix darstellt, $\begin{bmatrix} t \\ n \end{bmatrix}$ Koordinaten an der zweiten Prüfstelle darstellt und $\begin{bmatrix} T \\ N \end{bmatrix}$ Koordinaten an der ersten Prüfstelle darstellt; und

Durchführen derselben Abbildung auf die kinetische Kurve der Vernetzungsreaktion der zu prüfenden Probe unter Verwendung von $\begin{bmatrix} \alpha & \beta \\ \lambda & \mu \end{bmatrix}$;

wobei die Transformationsmatrix $\begin{bmatrix} \alpha & \beta \\ \lambda & \mu \end{bmatrix}$ gelöst wird durch:

Bestimmen von Koordinaten des Punktes B und Koordinaten des Punktes C in den kinetischen Kurven der Vernetzungsreaktion der Standardprobe an der zweiten Prüfstelle und der ersten Prüfstelle als jeweils $(t_B, n_B), (T_B, N_B)$ und $(t_C, n_C), (T_C, N_C)$;
Erhalten von Formel (2) und Formel (3) gemäß der Formel (1);

$$\begin{cases} \alpha t_B + \beta n_B = T_B \\ \alpha t_C + \beta n_C = T_C \end{cases} \qquad (2)$$

$$\begin{cases} \lambda t_B + \mu n_B = N_B \\ \lambda t_C + \mu n_C = N_C \end{cases} \qquad (3)$$

Erhalten von Lösungen der Formel (2) und der Formel (3), die jeweils durch Formel (4) und Formel (5) dargestellt werden; und

$$\begin{cases} \alpha = \begin{vmatrix} T_B & n_B \\ T_C & n_C \end{vmatrix} \bigg/ \begin{vmatrix} t_B & n_B \\ t_C & n_C \end{vmatrix} \\[2ex] \beta = \begin{vmatrix} T_B & t_B \\ T_C & t_C \end{vmatrix} \bigg/ \begin{vmatrix} t_B & n_B \\ t_C & n_C \end{vmatrix} \end{cases} \qquad (4)$$

$$\begin{cases} \lambda = \begin{vmatrix} N_B & n_B \\ N_C & n_C \end{vmatrix} \bigg/ \begin{vmatrix} t_B & n_B \\ t_C & n_C \end{vmatrix} \\[2ex] \mu = \begin{vmatrix} N_B & t_B \\ N_C & t_C \end{vmatrix} \bigg/ \begin{vmatrix} t_B & n_B \\ t_C & n_C \end{vmatrix} \end{cases} \qquad (5)$$

Berechnen jedes Matrixelements der Transformationsmatrix $\begin{bmatrix} \alpha & \beta \\ \lambda & \mu \end{bmatrix}$ gemäß der Formel (4) und der Formel (5).

2. Charakterisierungsverfahren nach Anspruch 1, wobei in Schritt (i) ein Massenverhältnis von Polyethylen niedriger Dichte zu Dicumylperoxid 100:1,95 ist, das Polyethylen niedriger Dichte einen Schmelzflussindex von 2,0 g/10 min und eine Dichte von 0,92 g/cm$^3$ unter 190 °C und 2,16 kg aufweist, und das Stehenlassen nicht weniger als 6 Stunden durchgeführt wird.

3. Charakterisierungsverfahren nach Anspruch 1, wobei, in Schritt (ii), Bedingungen zum Prüfen der kinetischen Kurve der Vernetzungsreaktion Folgendes umfassen:

   eine Temperatur einer Mischkammer des Drehmoment-Rheometers liegt in einem Bereich von 154,5 °C bis 155,5 °C,
   eine Rotordrehzahl des Drehmoment-Rheometers ist 35 r/min, und
   eine Masse der Probe liegt in einem Bereich von 44,9 g bis 45,1 g.

4. Charakterisierungsverfahren nach Anspruch 1, wobei in Schritt (ii) das Prüfen der kinetischen Kurve der Vernetzungsreaktion Folgendes umfasst:

   Erhöhen einer Temperatur einer Mischkammer des Drehmoment-Rheometers auf einen Bereich von 154,5 °C bis 155,5 °C, Drehen eines Rotors, dann Einbringen der Probe in die Mischkammer des Drehmoment-Rheometers und schnelles Verdichten der Probe mit einem Kolben; und
   Aufzeichnen einer Kurve des Rotordrehmoments als Funktion der Zeit, während der das Drehmoment einen Minimalwert erreicht und dann zu einem Maximalwert ansteigt, und
   Stoppen des Tests und Erhalten der kinetischen Kurve der Vernetzungsreaktion.

**Revendications**

1. Procédé de caractérisation de cohérence de performance de réticulation d'un matériau d'isolation de câble 500 kV à polyéthylène réticulé, comprenant :

   (i) préparer un échantillon étalon, comprenant une agitation complète pour mélanger du polyéthylène de basse densité et du peroxyde de dicumyle à une température dans une plage allant de 63 °C à 67 °C, et un repos pour permettre une diffusion complète du peroxyde de dicumyle dans le polyéthylène de basse densité ;
   (ii) tester, en utilisant un rhéomètre à couple, des courbes cinétiques de réaction de réticulation de l'échantillon étalon et d'un échantillon à tester ; et
   (iii) éliminer, en utilisant un procédé de transformation par échantillon étalon, des différences dans les courbes cinétiques de réaction de réticulation des échantillons introduites du fait de différents lieux de test ;

   dans lequel, à l'étape (ii), la courbe cinétique de réaction de réticulation comprend trois points qui sont désignés comme le point A, le point B et le point C respectivement,

   dans lequel le point A représente un pic de chargement, indiquant que l'échantillon est effectivement chargé dans une chambre de mélange du rhéomètre à couple,

le point B est un point où le couple atteint une valeur minimale, indiquant que l'échantillon a été complètement transformé à l'état fondu,

un segment de courbe entre le point A et le point B indique un processus de fusion de l'échantillon,

le point C est un point où le couple atteint une valeur maximale, indiquant l'achèvement d'une réaction de réticulation,

un segment de courbe entre le point B et le point C indique le processus de réaction de réticulation de l'échantillon,

une différence de temps $\Delta t$ entre le point B et le point C indique un temps de la réaction de réticulation, et

une différence de couple $\Delta N$ entre le point B et le point C indique un degré de la réaction de réticulation ;

dans lequel, à l'étape (iii), la méthode de transformation par échantillon étalon est conduite par transformation entre les courbes cinétiques de réaction de réticulation des échantillons respectivement à un premier lieu de test et à un deuxième lieu de test, ce qui comprend :

transformer la courbe cinétique de réaction de réticulation de l'échantillon étalon en mappant un espace de coordonnées au deuxième lieu de test dans un espace de coordonnées au premier lieu de test à travers une transformation linéaire selon une relation de transformation représentée dans la formule (1) :

$$\begin{bmatrix} \alpha & \beta \\ \lambda & \mu \end{bmatrix} \begin{bmatrix} t \\ n \end{bmatrix} = \begin{bmatrix} T \\ N \end{bmatrix} \qquad (1)$$

dans lequel, dans la formule (1), $\begin{bmatrix} \alpha & \beta \\ \lambda & \mu \end{bmatrix}$ représente une matrice de transformation, $\begin{bmatrix} t \\ n \end{bmatrix}$ représente des

coordonnées au deuxième lieu de test et $\begin{bmatrix} T \\ N \end{bmatrix}$ représente des coordonnées au premier lieu de test ; et

effectuer le même mappage sur la courbe cinétique de réaction de réticulation de l'échantillon à tester en utilisant

$\begin{bmatrix} \alpha & \beta \\ \lambda & \mu \end{bmatrix}$ ;

dans lequel la matrice de transformation $\begin{bmatrix} \alpha & \beta \\ \lambda & \mu \end{bmatrix}$ est résolue par :

déterminer des coordonnées du point B et des coordonnées du point C dans les courbes cinétiques de réaction de réticulation de l'échantillon étalon au deuxième lieu de test et au premier lieu de test comme $(t_B, n_B), (T_B, N_B)$ et $(t_C, n_C), (T_C, N_C)$, respectivement ;

acquérir la formule (2) et la formule (3) selon la formule (1) ;

$$\begin{cases} \alpha t_B + \beta n_B = T_B \\ \alpha t_C + \beta n_C = T_C \end{cases} \qquad (2)$$

$$\begin{cases} \lambda t_B + \mu n_B = N_B \\ \lambda t_C + \mu n_C = N_C \end{cases} \qquad (3)$$

acquérir des solutions de la formule (2) et de la formule (3), représentées respectivement par la formule (4) et la formule (5) ; et

$$\begin{cases} \alpha = \begin{vmatrix} T_B & n_B \\ T_C & n_C \end{vmatrix} / \begin{vmatrix} t_B & n_B \\ t_C & n_C \end{vmatrix} \\ \beta = \begin{vmatrix} T_B & t_B \\ T_C & t_C \end{vmatrix} / \begin{vmatrix} t_B & n_B \\ t_C & n_C \end{vmatrix} \end{cases} \qquad (4)$$

$$\begin{cases} \lambda = \begin{vmatrix} N_B & n_B \\ N_C & n_C \end{vmatrix} / \begin{vmatrix} t_B & n_B \\ t_C & n_C \end{vmatrix} \\ \mu = \begin{vmatrix} N_B & t_B \\ N_C & t_C \end{vmatrix} / \begin{vmatrix} t_B & n_B \\ t_C & n_C \end{vmatrix} \end{cases} \qquad (5)$$

calculer chaque élément de matrice de la matrice de transformation $\begin{bmatrix} \alpha & \beta \\ \lambda & \mu \end{bmatrix}$ selon la formule (4) et la formule (5).

2. Procédé de caractérisation selon la revendication 1, dans lequel, à l'étape (i), un rapport massique du polyéthylène de basse densité sur le peroxyde de dicumyle est de 100:1,95, le polyéthylène de basse densité présente un indice de fluidité à chaud de 2,0 g/10 min et une densité de 0,92 g/cm$^3$ sous 190 °C et 2,16 kg, et le repos est réalisé pendant pas moins de 6 heures.

3. Procédé de caractérisation selon la revendication 1, dans lequel, à l'étape (ii), des conditions pour tester la courbe cinétique de réaction de réticulation comprennent :

   une température d'une chambre de mélange du rhéomètre à couple étant dans une plage allant de 154,5 °C à 155,5 °C,
   une vitesse de rotation du rotor du rhéomètre à couple étant de 35 r/min, et
   une masse de l'échantillon étant dans une plage allant de 44,9 g à 45,1 g.

4. Procédé de caractérisation selon la revendication 1, dans lequel, à l'étape (ii), le fait de tester la courbe cinétique de réaction de réticulation comprend :

   élever une température d'une chambre de mélange du rhéomètre à couple à une plage allant de 154,5 °C à 155,5 °C, faire tourner un rotor, puis introduire l'échantillon dans la chambre de mélange du rhéomètre à couple et compacter rapidement l'échantillon avec un piston ; et
   enregistrer une courbe du couple de rotor en fonction du temps, au cours de laquelle le couple atteint une valeur minimale puis augmente jusqu'à une valeur maximale, et
   arrêter le test et obtenir la courbe cinétique de réaction de réticulation.

FIG. 1

FIG. 2

FIG. 3

FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019201153 A1

- US 20150291774 A1